# FASCICULE DE BREVET EUROPEEN

(11) **EP 3 429 835 B1**
(45) Date de publication et mention de la délivrance du brevet: **08.01.2020**
(21) Numéro de dépôt: 17713356.8
(22) Date de dépôt: 09.03.2017
(51) Int. Cl.: B32B 5/02, B32B 5/20, B32B 5/26, B32B 3/10, B32B 27/12, B29D 99/00, B32B 5/24, B29C 44/12, B29C 44/14, B29C 70/08, B29L 31/30, B29L 9/00, B29K 75/00, B29K 105/12, B60R 13/02, B29K 623/00, B29K 509/08

(54) **PROCÉDÉ DE RÉALISATION D'UN PANNEAU DE GARNISSAGE INTÉRIEUR DE VÉHICULE AUTOMOBILE**
VERFAHREN ZUR HERSTELLUNG EINER INNENVERKLEIDUNGSTAFEL FÜR EIN KRAFTFAHRZEUG
METHOD FOR PRODUCING AN INNER TRIM PANEL FOR A MOTOR VEHICLE

(30) Priorité: 15.03.2016 FR 1652184
(43) Date de publication de la demande: 23.01.2019
(73) Titulaire: TREVES Products, Services & Innovation, 75008 Paris (FR)
(72) Inventeur: LEMAIRE, Dominique, 08190 Villiers devant le Thour (FR)
(74) Mandataire: Sayettat, Julien Christian
(86) Numéro de dépôt international: PCT/FR2017/050521
(87) Numéro de publication internationale: WO 2017/158260

(56) Documents cités:
- WO-A1-2015/044099
- FR-A1- 2 124 363
- US-A- 4 933 131

## Description

L'invention concerne un procédé de réalisation d'un panneau de garnissage intérieur de véhicule automobile et un panneau obtenu par un tel procédé.

On connait un procédé de réalisation d'un tel panneau comprenant les étapes suivantes :
- prévoir deux flans de matériau fibreux poreux,
- les conformer de manière à obtenir une coque d'endroit et une coque d'envers aptes à définir, par superposition de leur bords respectifs, un volume fermé,
- disposer lesdites coques en regard l'une de l'autre dans un moule de moulage par injection-réaction (RIM), de manière à pouvoir définir ledit volume,
- injecter dans ledit volume un mélange précurseur de mousse de polyuréthanne rigide de manière à former une âme alvéolaire,
- après expansion et réticulation de la mousse, démouler l'ensemble obtenu,
- coller sur lesdites coques deux couches respectives de revêtement d'endroit et d'envers.

On citera à titre d'exemple le document WO2015/044099-A1 qui divulgue une telle façon de procéder, à l'exception de l'étape de collage des couches de revêtement.

Un panneau ainsi obtenu présente une bonne résistance à la flexion du fait de la pénétration de la mousse dans l'épaisseur du matériau fibreux poreux, qui a pour effet de le durcir, et de l'effet de poutre obtenu de par la structure du panneau en deux coques écartées l'une de l'autre par un corps en mousse.

On pourrait envisager de réaliser une fixation des couches de revêtement sur les coques lors de la conformation des flans, ceci en prévoyant notamment la présence d'un composant de liage des fibres à base de matériau thermoplastique fusible à la température de formage desdits flans, ledit composant permettant la fixation attendue,

On s'affranchirait ainsi de l'étape de collage desdites couches.

Cependant, une telle façon de procéder s'avère délicate.

En effet, lors de son expansion, la mousse est susceptible de traverser les coques de part en part et de dégrader les couches de revêtement qui auraient été préalablement fixées sur les coques.

C'est la raison pour laquelle les couches de revêtement sont associées aux coques dans une étape de fabrication ultérieure, ce qui a un impact négatif sur le coût de fabrication du panneau.

L'invention a pour but de pallier cet inconvénient.

A cet effet, et selon un premier aspect, l'invention propose un procédé de réalisation d'un panneau de garnissage intérieur de véhicule automobile, conformément à la revendication 1, ledit
procédé comprenant les étapes suivantes :
- réaliser un empilement d'endroit et un empilement d'envers comprenant chacun une couche de renfort étanche à une mousse de polyuréthane rigide à base de matériau thermoplastique chargé en fibres de renfort, lesdites fibres étant généralement orientées selon une direction donnée, et une couche fibreuse poreuse à base de fibres liées entre elles par une résine thermoplastique analogue audit matériau, les faces externes desdites couches étanches et poreuses étant revêtues d'une couche respective de protection poreuse,
- comprimer chacun desdits empilements entre deux plateaux portés à température de fusion dudit matériau,
- disposer chacun desdits empilements dans un moule respectif refroidi pourvu d'un poinçon et d'une matrice, ladite couche de protection de ladite couche de renfort dudit empilement d'endroit étant :
   o soit revêtue d'une couche de revêtement d'endroit,
   o soit laissée non revêtue pour former elle-même couche de revêtement d'endroit,
      de manière à réaliser leur thermoformage et l'association desdites couches entre elles et à obtenir une coque d'endroit et une coque d'envers aptes à définir, par superposition de leur bords respectifs, un volume fermé délimité par les couches de protection des couches fibreuses,
- disposer lesdites coques en regard l'une de l'autre dans un moule de moulage par injection-réaction (RIM), de manière à pouvoir définir ledit volume,
- injecter dans ledit volume un mélange précurseur de mousse de polyuréthanne rigide de manière à former une âme alvéolaire,
- après expansion et réticulation de la mousse, démouler l'ensemble obtenu.

On précise ici que les couches de protection ont pour fonction d'éviter un collage des couches de renfort et fibreuse lors de leur chauffe entre les plateaux.

Par ailleurs, le fait de prévoir, dans la couche fibreuse, une résine thermoplastique analogue au matériau thermoplastique de la couche de renfort permet une association optimale entre les deux couches lors du thermoformage.

Avec le procédé proposé, les couches de revêtement sont associées aux coques lors de l'étape de thermoformage, et non lors d'une étape supplémentaire de collage, ce qui a un impact favorable sur le coût de fabrication du panneau.

Le fait que les couches de renfort soient étanches à la mousse permet d'éviter tout risque de dégradation des couches de revêtement par la mousse de l'âme. Un panneau ainsi obtenu présente une bonne résistance à la flexion du fait de la pénétration de la mousse dans l'épaisseur de la couche fibreuse et de l'effet de poutre obtenu de par la structure du panneau en deux coques écartées l'une de l'autre par un corps en mousse.

En outre, la présence des couches de renfort permet de réaliser un panneau particulièrement résistant en flexion.

Selon un deuxième aspect, l'invention propose un panneau réalisé par un tel procédé, conformément à la revendication 7.

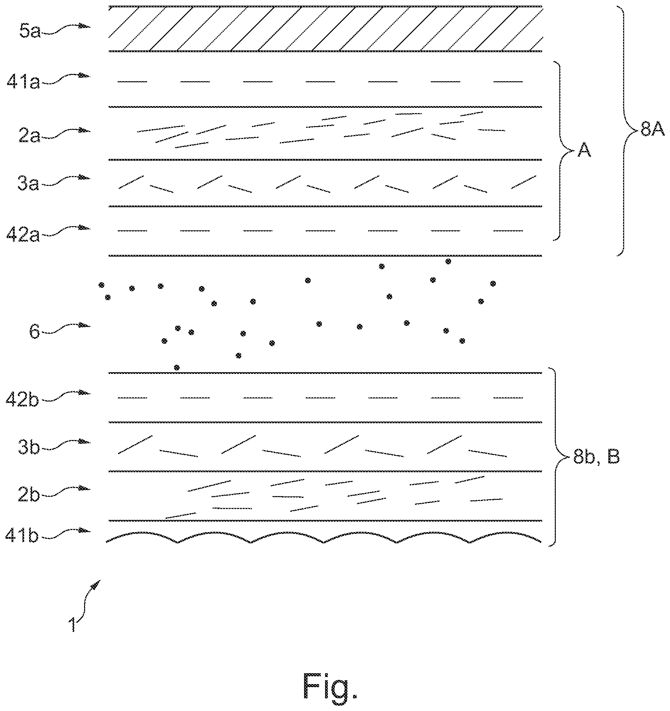

D'autres particularités et avantages de l'invention apparaîtront dans la description qui suit, faite en référence à la figure jointe qui est une représentation schématique en coupe partielle d'un panneau obtenu selon une réalisation.

En référence à la figure, on décrit un procédé de réalisation d'un panneau 1 de garnissage intérieur - par exemple sous forme de plancher de compartiment à bagages - de véhicule automobile, ledit procédé comprenant les étapes suivantes :
- réaliser un l'empilement d'endroit A et un empilement d'envers B comprenant chacun une couche de renfort 2a,2b étanche à la mousse à base de matériau thermoplastique - notamment de polypropylène - chargé en fibres de renfort - notamment de verre -, lesdites fibres étant généralement orientées selon une direction donnée, et une couche fibreuse 3a,3b poreuse à base de fibres - notamment de verre - liées entre elles par une résine thermoplastique - notamment en polypropylène - analogue audit matériau, les faces externes desdites couches étanches et poreuses étant revêtues d'une couche respective de protection 41 a,42a,41 b,42b poreuse,
- comprimer chacun desdits empilements entre deux plateaux portés à température de fusion dudit matériau,
- disposer chacun desdits empilements dans un moule respectif refroidi pourvu d'un poinçon et d'une matrice, ladite couche de protection de ladite couche de renfort dudit empilement d'endroit étant :
   o soit revêtue d'une couche de revêtement d'endroit 5a, comme représenté sur la réalisation de la figure,
   o soit laissée non revêtue pour former elle-même couche de revêtement d'endroit, selon une variante non représentée,
      de manière à réaliser leur thermoformage et l'association desdites couches entre elles et à obtenir une coque d'endroit 8a et une coque d'envers 8b aptes à définir, par superposition de leur bords respectifs, un volume fermé délimité par les couches de protection 42a,42b des couches fibreuses 3a,3b,
- disposer lesdites coques en regard l'une de l'autre dans un moule de moulage par injection-réaction (RIM), de manière à pouvoir définir ledit volume,
- injecter dans ledit volume un mélange précurseur de mousse de polyuréthanne rigide de manière à former une âme 6 alvéolaire,
- après expansion et réticulation de la mousse, démouler l'ensemble obtenu.

On précise ici que l'option consistant à associer la couche de revêtement d'endroit 5a lors du thermoformage, et non pendant la compression entre les plateaux, se justifie notamment lorsque ladite couche est susceptible de se dégrader par une telle compression - notamment lorsqu'elle est à base de moquette - ceci par effet de « repassage ».

On précise également que le procédé peut comprendre une étape de découpe périphérique, réalisée notamment pendant l'opération de thermoformage.

Selon une réalisation, pour l'un et/ou l'autre des empilements A,B, la couche de protection 42a,42b de la couche fibreuse 3a,3b est un non-tissé de masse surfacique comprise entre 30 et 50 g/m².

Selon une réalisation, la couche de protection 41a de la couche de renfort 2a de l'empilement d'endroit A est un non-tissé de masse surfacique comprise entre 30 et 50 g/m².

Selon une réalisation, la couche de protection 41b de la couche de renfort 2b de l'empilement d'envers B est un non-tissé formant couche de revêtement d'envers, ledit non-tissé présentant notamment une masse surfacique comprise entre 70 et 90 g/m².

En variante, au moins une des couches de protection 41 a,42a,41 b,42b est d'une autre nature qu'un non-tissé, étant par exemple sous forme de maille.

Selon une réalisation non représentée, pour l'un et/ou l'autre des empilements A,B, la couche de renfort 2a,2b occupe une fraction de la superficie de la couche fibreuse 3a,3b, de manière à réaliser un médaillon de renfort localisé.

Selon une réalisation non représentée, au moins un empilement A,B comprend au moins deux médaillons de nature différente, notamment de par leur masse surfacique, de manière à assurer un renfort différencié d'une zone à l'autre de la couche fibreuse 3a,3b.

On précise ici que les fibres des couches fibreuse 3a,3b et de renfort 2a,2b peuvent être de diverses nature : verre, carbone, végétale, synthétique,...

Selon une réalisation, les couches de renfort 2a,2b sont à base de polypropylène et fibre de verre et présentent une masse surfacique comprise entre 250 et 450 g/m².

Selon une réalisation, les couches de renfort 2a,2b ont un module de Young supérieur à 15000 MPa.

Selon une réalisation, la couche de revêtement d'endroit 5a est à base de moquette.

Selon une réalisation, les couches fibreuses 3a,3b sont à base de fibres de verre liées par du polypropylène et présentent une masse surfacique comprise entre 600 et 900 g/m².

L'âme 6 peut notamment présenter une densité comprise entre 0,08 et 0,25.

En particulier, la mousse de l'âme 6 peut être mélangée à des fibres de renfort, notamment de verre.

On décrit enfin un panneau 1 obtenu par un tel procédé, ledit panneau comprenant successivement :
- éventuellement - comme c'est le cas dans la réalisation représentée - une couche de revêtement d'endroit 5a,
- une couche de protection 41a poreuse,
- une couche de renfort 2a étanche à la mousse à base de matériau thermoplastique chargé en fibres de renfort, lesdites fibres étant généralement orientées selon une direction donnée,
- une couche fibreuse 3a poreuse à base de fibres liées entre elles par une résine thermoplastique analogue audit matériau,
- une couche de protection 42a poreuse,
- une âme 6 à base de mousse de polyuréthanne rigide,
- une couche de protection 42b poreuse,
- une couche fibreuse 3b poreuse à base de fibres liées entre elles par une résine thermoplastique,
- une couche de renfort 2b étanche à la mousse à base de matériau thermoplastique analogue à ladite résine chargé en fibres de renfort, lesdites fibres étant généralement orientées selon une direction donnée,
- une couche de protection 41b poreuse, formant ici couche de revêtement d'envers.

On peut le cas échéant, de façon non représentée, revêtir la couche de protection 41b d'une couche supplémentaire de revêtement d'envers.

## Revendications

1. Procédé de réalisation d'un panneau (1) de garnissage intérieur de véhicule automobile, ledit procédé comprenant les étapes suivantes :
• réaliser un empilement d'endroit (A) et un empilement d'envers (B) comprenant chacun une couche de renfort (2a,2b) étanche à une mousse polyuréthane rigide, à base de matériau thermoplastique chargé en fibres de renfort, lesdites fibres étant généralement orientées selon une direction donnée, et une couche fibreuse (3a,3b) poreuse à base de fibres liées entre elles par une résine thermoplastique analogue audit matériau, les faces externes desdites couches étanches et poreuses étant revêtues d'une couche respective de protection (41 a,42a,41 b,42b) poreuse,
• comprimer chacun desdits empilements entre deux plateaux portés à température de fusion dudit matériau,
• disposer chacun desdits empilements dans un moule respectif refroidi pourvu d'un poinçon et d'une matrice, ladite couche de protection de ladite couche de renfort dudit empilement d'endroit étant :
o soit revêtue d'une couche de revêtement d'endroit (5a),
o soit laissée non revêtue pour former elle-même couche de revêtement d'endroit,
de manière à réaliser leur thermoformage et l'association desdites couches entre elles et à obtenir une coque d'endroit (8a) et une coque d'envers (8b) aptes à définir, par superposition de leur bords respectifs, un volume fermé délimité par les couches de protection (42a,42b) des couches fibreuses (3a,3b),
• disposer lesdites coques en regard l'une de l'autre dans un moule de moulage par injection-réaction (RIM), de manière à pouvoir définir ledit volume,
• injecter dans ledit volume un mélange précurseur de mousse de polyuréthanne rigide de manière à former une âme (6) alvéolaire,
• après expansion et réticulation de la mousse, démouler l'ensemble obtenu.

2. Procédé selon la revendication 1, **caractérisé en ce que**, pour l'un et/ou l'autre des empilements (A,B), la couche de protection (42a,42b) de la couche fibreuse (3a,3b) est un non-tissé de masse surfacique comprise entre 30 et 50 g/m².

3. Procédé selon l'une des revendications 1 ou 2, **caractérisé en ce que** la couche de protection (41a) de la couche de renfort (2a) de l'empilement d'endroit (A) est un non-tissé de masse surfacique comprise entre 30 et 50 g/m².

4. Procédé selon l'une quelconque des revendications 1 à 3, **caractérisé en ce que** la couche de protection (41b) de la couche de renfort (2b) de l'empilement d'envers (B) est un non-tissé formant couche de revêtement d'envers, ledit non-tissé présentant notamment une masse surfacique comprise entre 80 et 100 g/m².

5. Procédé selon l'une quelconque des revendications 1 à 4, **caractérisé en ce que**, pour l'un et/ou l'autre des empilements (A,B), la couche de renfort (2a,2b) occupe une fraction de la superficie de la couche fibreuse (3a,3b), de manière à réaliser un médaillon de renfort localisé.

6. Procédé selon la revendication 5, **caractérisé en ce qu'**au moins un empilement (A,B) comprend au moins deux médaillons de nature différente, de manière à assurer un renfort différencié d'une zone à l'autre de la couche fibreuse (3a,3b).

7. Panneau obtenu par un procédé selon l'une quelconque des revendications 1 à 6, ledit panneau comprenant successivement :
• éventuellement une couche de revêtement d'endroit (5a),
• une couche de protection (41a) poreuse,
• une couche de renfort (2a) étanche à la mousse à base de matériau thermoplastique chargé en fibres de renfort, lesdites fibres étant généralement orientées selon une direction donnée,
• une couche fibreuse (3a) poreuse à base de fibres liées entre elles par une résine thermoplastique analogue audit matériau,
• une couche de protection (42a) poreuse,
• une âme (6) à base de mousse de polyuréthanne rigide,
• une couche de protection (42b) poreuse,
• une couche fibreuse (3b) poreuse à base de fibres liées entre elles par une résine thermoplastique,
• une couche de renfort (2b) étanche à la mousse à base de matériau thermoplastique analogue à ladite résine chargé en fibres de renfort, lesdites fibres étant généralement orientées selon une direction donnée,
• une couche de protection (41 b) poreuse.

## Patentansprüche

1. Verfahren zur Herstellung eines Innenverkleidungspaneels (1) für ein Kraftfahrzeug, wobei das Verfahren die folgenden Schritte umfasst:
- Herstellen eines vorderseitigen Stapels (A) und eines rückseitigen Stapels (B), die jeder eine gegenüber einem starren Polyurethanschaum dichte Verstärkungsschicht (2a, 2b) auf Basis von thermoplastischem Material, das mit Verstärkungsfasern gefüllt ist, wobei die Fasern allgemein in einer gegebenen Richtung ausgerichtet sind, und eine poröse Faserschicht (3a, 3b) auf Basis von Fasern umfassen, die untereinander durch ein dem Material analoges thermoplastisches Harz verbunden sind, wobei die Außenseiten der dichten und porösen Schichten mit einer jeweiligen porösen Schutzschicht (41a, 42a, 41b, 42b) beschichtet sind,
- Komprimieren jedes der Stapel zwischen zwei Platten, die auf Schmelztemperatur des Materials gebracht werden,
- Anordnen jedes der Stapel in einer jeweiligen gekühlten Form, die mit einem Stempel und einer Matrize versehen ist, wobei die Schutzschicht der Verstärkungsschicht des vorderseitigen Stapels:
-- entweder mit einer vorderseitigen Beschichtungsschicht (5a) beschichtet wird,
-- oder unbeschichtet gelassen wird, um ihrerseits selbst eine vorderseitige Beschichtungsschicht zu bilden,
um ihre Thermoformung und die Verbindung der Schichten untereinander herzustellen und eine vorderseitige Schale (8a) und eine rückseitige Schale (8b) zu erhalten, die in der Lage sind, durch Übereinanderlegen ihrer jeweiligen Kanten ein geschlossenes Volumen zu bilden, das von den Schutzschichten (42a, 42b) der Faserschichten (3a, 3b) begrenzt wird,
- Anordnen der Schalen einander zugewandt in einer Reaction Injection Moulding- (RIM) Form, um das Volumen definieren zu können,
- Injizieren einer Vorstufenmischung von starrem Polyurethanschaum in das Volumen, um einen Wabenkern (6) zu bilden,
- Ausformen der erhaltenen Baugruppe nach Expansion und Vernetzung des Schaums.

2. Verfahren nach Anspruch 1, **dadurch gekennzeichnet, dass** bei dem einen und/oder dem anderen der Stapel (A, B) die Schutzschicht (42a, 42b) der Faserschicht (3a, 3b) ein Vlies mit einem Flächengewicht im Bereich zwischen 30 und 50 g/m² ist.

3. Verfahren nach einem der Ansprüche 1 oder 2, **dadurch gekennzeichnet, dass** die Schutzschicht (41a) der Verstärkungsschicht (2a) des vorderseitigen Stapels (A) ein Vlies mit einem Flächengewicht im Bereich zwischen 30 und 50 g/m² ist.

4. Verfahren nach einem der Ansprüche 1 bis 3, **dadurch gekennzeichnet, dass** die Schutzschicht (41b) der Verstärkungsschicht (2b) des rückseitigen Stapels (B) ein Vlies ist, das eine rückseitige Beschichtungsschicht bildet, wobei das Vlies insbesondere ein Flächengewicht im Bereich zwischen 80 und 100 g/m² aufweist.

5. Verfahren nach einem der Ansprüche 1 bis 4, **dadurch gekennzeichnet, dass** bei dem einen und/oder dem anderen der Stapel (A, B) die Verstärkungsschicht (2a, 2b) einen Bruchteil der Oberfläche der Faserschicht (3a, 3b) einnimmt, um ein lokalisiertes Verstärkungsmedaillon herzustellen.

6. Verfahren nach Anspruch 5, **dadurch gekennzeichnet, dass** mindestens ein Stapel (A, B) mindestens zwei Medaillons unterschiedlicher Art umfasst, um eine Verstärkung sicherzustellen, die sich von einer Zone der Faserschicht (3a, 3b) zur anderen unterscheidet.

7. Paneel, das über ein Verfahren nach einem der Ansprüche 1 bis 6 erhalten wird, wobei das Paneel nacheinander umfasst:
- gegebenenfalls eine vorderseitige Beschichtungsschicht (5a),
- eine poröse Schutzschicht (41a),
- eine gegenüber dem Schaum dichte Verstärkungsschicht (2a) auf Basis von thermoplastischem Material, das mit Verstärkungsfasern gefüllt ist, wobei die Fasern allgemein in einer gegebenen Richtung ausgerichtet sind,
- eine poröse Faserschicht (3a) auf Basis von Fasern, die untereinander durch ein dem Material analoges thermoplastisches Harz verbunden sin,
- eine poröse Schutzschicht (42a),
- einen Kern (6) auf Basis von starrem Polyurethanschaum,
- eine poröse Schutzschicht (42b),
- eine poröse Faserschicht (3b) auf Basis von Fasern, die untereinander durch ein thermoplastisches Harz verbunden sind,
- eine gegenüber dem Schaum dichte Verstärkungsschicht (2b) auf Basis von thermoplastischem Material, das dem mit Verstärkungsfasern gefüllten Harz analog ist, wobei die Fasern allgemein in einer gegebenen Richtung ausgerichtet sind,
- eine poröse Schutzschicht (41b).

## Claims

1. Method for producing an inner trim panel (1) for a motor vehicle, said method comprising the following steps:
- producing a right-side stack (A) and a wrong-side stack (B) each comprising a reinforcement layer (2a, 2b) impervious to a rigid polyurethane foam, based on a thermoplastic material containing reinforcement fibres, said fibres being generally oriented in a given direction, and a porous fibrous layer (3a, 3b) based on fibres bonded together by a thermoplastic resin similar to said material, the external faces of said impervious and porous layers being clad with a respective porous protection layer (41a, 42a, 41b, 42b),
- compressing each of said stacks between two plates heated to the melting point of said material,
- disposing each of said stacks in a respective cooled mould provided with a punch and die, said protection layer of said reinforcement layer of said right-face stack being:
-- either clad with a right-face cladding layer (5a),
-- or left unclad in order itself to form the right-face cladding layer,
so as to achieve thermoforming thereof and the association of said layers with each other and to obtain a right-face shell (8a) and a wrong-face shell (8b) able to define, by superimposition of their respective edges, a closed volume delimited by the protection layers (42a, 42b) of the fibrous layers (3a, 3b),
- disposing said shells facing each other in a reaction injection moulding (RIM) mould so as to be able to define said volume,
- injecting a rigid polyurethane foam precursor mixture into said volume so as to form an alveolar core (6),
- after expansion and crosslinking of the foam, removing the assembly obtained from the mould.

2. Method according to claim 1, **characterised in that**, for one or other or both of the stacks (A, B), the protection layer (42a, 42b) of the fibrous layer (3a, 3b) is a non-woven material with a mass per unit surface of between 30 and 50 g/m².

3. Method according to either claim 1 or claim 2, **characterised in that** the protection layer (41a) of the reinforcement layer (2a) of the right-face stack (A) is a non-woven material with a mass per unit surface of between 30 and 50 g/m².

4. Method according to any of claims 1 to 3, **characterised in that** the protection layer (41b) of the reinforcement layer (2b) of the wrong-face stack (B) is a non-woven material forming a wrong-face cladding layer, said non-woven material having in particular a mass per unit surface of between 80 and 100 g/m².

5. Method according to any of claims 1 to 4, **characterised in that**, for one or other or both of the stacks (A, B), the reinforcement layer (2a, 2b) occupies a fraction of the surface area of the fibrous layer (3a, 3b), so as to produce a localised reinforcement insert.

6. Method according to claim 5, **characterised in that** at least one stack (A, B) comprises at least two inserts of different natures, so as to provide a differentiated reinforcement from one area of the fibrous layer to another (3a, 3b).

7. Panel obtained by a method according to any of claims 1 to 6, said panel comprising successively:
- optionally a right-face cladding layer (5a),
- a porous protection layer (41a),
- a reinforcement layer (2a) impervious to foam based on a thermoplastic material containing reinforcement fibres, said fibres being generally oriented in a given direction,
- a porous fibrous layer (3a) based on fibres bonded together by a thermoplastic resin similar to said material,
- a porous protection layer (42a),
- a core (6) based on rigid polyurethane foam,
- a porous protection layer (42b),
- a porous fibrous layer (3b) based on fibres bonded together by a thermoplastic resin,
- a reinforcement layer (2b) impervious to the foam based on thermoplastic material similar to said resin containing reinforcement fibres, said fibres being generally oriented in a given direction,
- a porous protection layer (41b).
